# EUROPÄISCHE PATENTSCHRIFT

(11) **EP 1 985 524 B1**
(45) Veröffentlichungstag und Bekanntmachung des Hinweises auf die Patenterteilung: **22.05.2013**
(21) Anmeldenummer: 08000164.7
(22) Anmeldetag: 07.01.2008
(51) Int. Cl.: B62D 5/083

(54) **Servolenkung mit Rückwirkungsanordnung und Druckregelung**
Power steering with feedback device pressure regulation
Direction assistée dotée d'un système de rétroaction et d'un réglage de la pression

(30) Priorität: 24.04.2007 DE 102007019620
(43) Veröffentlichungstag der Anmeldung: 29.10.2008
(73) Patentinhaber: ThyssenKrupp Presta SteerTec GmbH, 40476 Düsseldorf (DE)
(72) Erfinder: Schröder, Anatoli, 70567 Stuttgart (DE)
(74) Vertreter: Lenzing Gerber Stute

(56) Entgegenhaltungen:
- DE-A1- 10 131 753
- DE-A1- 10 337 376
- DE-C1- 19 616 439

## Beschreibung

Die vorliegende Erfindung betrifft eine Servolenkung mit den Merkmalen des Oberbegriffs des Anspruchs 1.

Servolenkungen mit Rückwirkungsanordnungen sind in verschiedenen Ausführungsformen bekannt. Eine grundlegende Konstruktion ist in der deutschen Patentschrift DE 196 16 439 C1 beschrieben. Hier weist der Drehschieber eine Anzahl von axialen V-Nuten auf, in denen kugelförmige Rückwirkungskörper einliegen. Diese Rückwirkungskörper werden in radialen Bohrungen der umgebenden Steuerbuchsen radial verschieblich gelagert. In der Mittelstellung des Drehschieberventils liegen die Rückwirkungskörper an beiden Flanken der V-Nuten an. Wird der Drehschieber bei einer Lenkbewegung gegen die Steuerbuchse verdreht, so liegen die Rückwirkungskörper nur noch an der jeweils linken oder rechten Flanke der V-Nut an. Ein von außen aufgeprägter Hydraulikdruck drängt die Rückwirkungskörper dann gegen diese Flanken und erzeugt eine Rückstellkraft.

Bei der Servolenkung nach der Patentschrift DE 196 16 439 C1 ist dieser Hydraulikdruck nicht geregelt.

Eine entsprechende Anordnung ist in der Offenlegungsschrift DE 101 31 753 A1 dargestellt. Bei dieser Rückwirkungsanordnung ist eine der Rückwirkungskugeln durch ein federbelastetes Plattenventil ersetzt worden. Dieses Plattenventil steht auf einer Seite mit dem Hydraulikfluid in Verbindung, dessen Druck das Rückwirkungsmoment erzeugt. Auf der anderen Seite kommuniziert das Plattenventil mit dem drucklosen Vorratsbehälter. Die Ausgestaltung des Ventils bewirkt eine Öffnung bei einem bestimmten Druck, so dass der effektiv auf die Rückwirkungskörper wirkende Druck begrenzt ist. Auf diese weise wird ein maximal mögliches Rückwirkungsmoment definiert.

Eine Weiterbildung zeigt die DE 103 37 376 A1, bei der eine externe Ventilanordnung vorgeschlagen wird, die den Druck in der Rückwirkungsanordnung nicht nur begrenzt, sondern auch unterhalb des Grenzwerts regelt.

Ausgehend von diesem Stand der Technik ist es Aufgabe der vorliegenden Erfindung, eine Servolenkung mit einer Rückwirkungsanordnung zu schaffen, bei der der auf die Rückwirkungsanordnung wirkende Druck ohne aufwändige externe Ventilmittel nicht nur der Höhe nach begrenzt ist, sondern auch abhängig von dem Relativwinkel zwischen dem Drehschieber und der Steuerbuchse gesteuert ist.

Diese Aufgabe wird von einer Servolenkung mit den Merkmalen des Anspruchs 1 gelöst.

Weil die Steuerbuchse in wenigstens einer Radialbohrung ein axial verlagerbares Ventilglied trägt, das von den Flanken der V-Nut bei einer Relativdrehung des Drehschiebers aus der Mittellage heraus in Radialrichtung hin der Bohrung verlagert wird und dabei einen veränderlichen Öffnungsquerschnitt zwischen der Hochdruckseite und der Niederdruckseite der Rückwirkungsanordnung bildet, wird ein Bypass zu der Rückwirkungsanordnung geschaffen, über den winkelabhängig der Druck abgebaut werden kann.

Vorzugsweise ist das Ventilglied ein Schieber mit einer in die Mantelfläche eingestochenen achsparallelen Nut. Weiter wird bevorzugt, wenn die Nut in ihrer Längserstreckung einen sich ändernden Nutenquerschnitt aufweist. Dabei ist für einen mit dem Drehwinkel zunehmenden Druckabbau vorteilhaft, wenn die Nut von dem Hochdruckteil zu dem Niederdruckteil hin sich im Querschnitt erweitert.

Das Ventilglied kann ohne wesentliche Änderungen an dem Drehschieberventil nach dem Stand der Technik an Stelle eines Rückwirkungskörpers eingesetzt werden, wenn das Ventilglied einen im wesentlichen kreiszylindrischen Querschnitt aufweist, wobei die dem Drehschieber zugewandte Fläche eine halbkugelförmige oder kegelförmige Geometrie aufweist.

Eine besonders vorteilhaft Funktion ergibt sich, wenn wenigstens die Oberfläche des Ventilglieds, vorzugsweise aber auch die innere Oberfläche der Radialbohrung der Steuerbuchse, in der das Ventilglied einliegt, eine polierte Oberfläche aufweist. Schließlich kann eine einfache Fertigung erzielt werden, wenn der Öffnungsquerschnitt des Ventilglieds von einer Abflachung gebildet wird.

Nachfolgend wird ein Ausführungsbeispiel der vorliegenden Erfindung anhand der Zeichnung beschrieben. Es zeigen:
- Fig. 1:: Eine Steuerbuchse einer erfindungsgemäßen Servolenkung in einer Seitenansicht;
- Fig. 2:: Die Steuerbuchse aus Fig. 1 in einem Querschnitt entlang der Linie II - II;
- Fig. 3:: Das Ventilglied aus Fig. 1 und Fig. 2 in einer Seitenansicht, gegenüber Fig. 2 um 90° gedreht; sowie
- Fig. 4:: das Ventilglied aus Fig. 3 in einer Draufsicht.

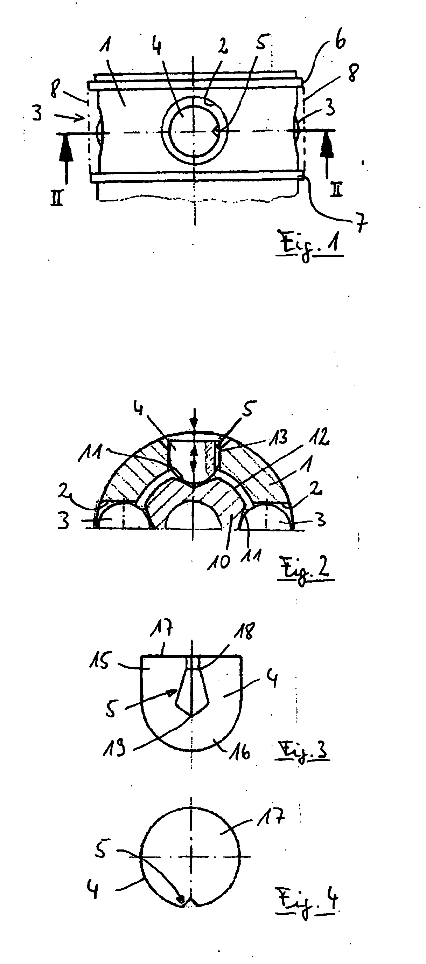

Fig. 1 zeigt eine Steuerbuchse 1 in einer teilweise abgebrochenen Seitenansicht, die nur den der Rückwirkungsanordnung zugeordneten Abschnitt darstellt. Die Steuerbuchse 1 weist insgesamt vier radial verlaufende Bohrungen 2 auf, in denen in an sich bekannter Weise Rückwirkungskörper 3 einliegen. Die mittig in der Fig. 1 dargestellt Bohrung 2 trägt ein axial in dieser Bohrung verschiebliches ventilglied 4, welches wiederum eine Steuernut 5 in seiner äußeren Umfangsfläche aufweist. Der dargestellte Abschnitt der Steuerbuchse 1 wird als ein äußerer Druckraum 8 von Dichtungsringen 6 und 7 begrenzt, die im Betrieb mit einem umgebenden Gehäuse zusammenwirken, um etwa entlang der Strichpunktlinien den Raum 8 zu begrenzen. Dieser Raum 8 wird im Betrieb mit Druck beaufschlagt. Die Steuerbuchse 1 ist gegenüber dem Gehäuse drehbar. Zwischen der Steuerbuchse 1 und dem Drehschieber 10 befindet sich ein Innenraum 12, der sich hydraulisch auf Niederdruck befindet.

Die Fig. 2 zeigt eine Querschnitt entlang der Linie II - II aus Fig. 1. In dieser Darstellung ist veranschaulicht, dass im Innern der Steuerbuchse 1 ein Drehschieber 10 drehbar gelagert ist. Der Drehschieber 10 weist insgesamt vier v-förmige Nuten 11 auf, die in einem gleichmäßigen Winkelabstand von 90° in Umfangsrichtung um den Drehschieber verteilt sind. Die v-förmigen Nuten 11 verlaufen in Längsrichtung, also mit ihrem Nutengrund parallel zur Mittelachse des Drehschiebers 10.

Die V-Nuten 11 öffnen sich symmetrisch radial nach außen, so dass die Rückwirkungskörper 3 und das ventilglied 4 in der dargestellten Neutralposition des Drehschiebers an beiden Flanken der jeweiligen V-Nut 11 anliegen. Bei der Radialbohrung 2, die dem Ventilglied 4 zugeordnet ist, ist die dem Außenraum zugewandte Bohrungskante konisch abgefast, so dass sich an der mit 13 bezeichneten Stelle eine mit der Nut 5 zusammenwirkende Steuerkante ergibt. Da die Fase dieser Bohrung 2 umlaufend ist, kann das Ventilglied 4 in einer beliebigen Orientierung eingebaut werden.

Das Ventilglied 4 ist in der Fig. 3 vergrößert dargestellt, und zwar gegenüber der Fig. 2 in einer um 90° um die Längsachse gedrehten Darstellung. Es ist erkennbar, dass das Ventilglied 4 insgesamt eine etwa rotationssymmetrische Gestalt aufweist, mit einem kreiszylindrischen Abschnitt 15, einem halbkugelförmigen Ende 16 und einer dem halbkugelförmigen Ende 16 gegenüberliegenden, planen Stirnfläche 17. Die Nut 5 ist ausgehend von der Stirnfläche 17 zunächst parallel zur Symmetrieachse des Ventilglieds 4 mit einem konstanten Querschnitt ausgebildet, wobei ab einer Übergangsstelle 18 die Nut sich gleichförmig erweitert, bis ein Endbereich 19 erreicht ist, an dem die Nut 5 endet.

Die Fig. 4 zeigt das Ventilglied 4 in einer Draufsicht auf die Stirnseite 17. Der Querschnitt der Nut 5 ist v-förmig mit einem Öffnungswinkel von etwa 90°. Für eine besonders einfache Fertigung kann die Nut 5 in das Ventilglied 4 eingeschliffen werden.

Im Betrieb arbeitet die Rückwirkungsanordnung der erfindungsgemäßen Servolenkung zunächst wie im Stand der Technik. In der in Fig. 2 dargestellten Neutralstellung wird von dem äußeren Druckraum 8 her ein Hydraulikdruck auf die Rückwirkungskörper 3 und auf das Ventilglied 4 ausgeübt. Der Hydraulikdruck bewirkt, dass der Drehschieber 10 nur gegen die dadurch entstehende Rückstellkraft aus der Neutralstellung gedreht werden kann. Wenn der Drehschieber 10 aus der Neutralstellung heraus gedreht ist, liegen die Rückwirkungskörper 3 sowie das Ventilglied 4 an jeweils einer Nutenflanke der V-Nuten 11 an und erzeugen auf diese Weise eine Rückstellkraft in die Neutralstellung. Dies bewirkt eine Rückstellkraft des Lenkrades in die Mittelstellung und eine Reduktion der Servounterstützung. Die Kraftfahrzeuglenkung wird dadurch weniger leichtgängig, was insbesondere bei höheren Fahrzeuggeschwindigkeiten nahe der Geradeausstellung erwünscht ist.

Durch die Ausgestaltung des Ventilgliedes 4 tritt nun zusätzlich folgender Effekt auf. Bei relativ große Verdrehwinkeln zwischen dem Drehschieber 10 und der Steuerbuchse 1 wird das Ventilglied 4 in der Bohrung 2 ein Stück weit angehoben. Dabei erreicht der Übergangsbereich 18 der Nut 5 die Steuerkante 13 und wandert über diese in Radialrichtung der Steuerbuchse 1 hinaus. Der Querschnitt der Nut, der eine vom Hydraulikfluid frei durchströmbare Öffnung bildet, vergrößert sich, so dass aus dem äußeren Druckraum 8 das Hydraulikfluid durch die Nut 5 in den Niederdruckbereich strömen kann. Die Rückwirkungskraft, die durch die Rückwirkungskörper 3 und das Ventilglied 4 auf den Drehschieber 10 ausgeübt wird, sinkt mit dem abnehmenden Hydraulikdruck.

Im Fahrbetrieb bedeutet dies, dass bei größeren Verdrehwinkeln zwischen dem Drehschieber 10 und der Steuerbuchse 1, was der Anforderung einer erhöhten Servounterstützung durch den Fahrer entspricht, die Rückwirkung reduziert wird und in den dadurch gekennzeichneten Betriebszuständen (Abbiegen, Parkieren, Rangieren) die Servounterstützung in geringerem Maße durch die Rückwirkungsanordnung reduziert wird.

Es ist hervorzuheben, dass diese vorteilhafte Wirkung erfindungsgemäß in besonders einfacher Weise allein durch den Ersatz eines Rückwirkungskörpers durch das beschriebene Ventilglied erzielt werden kann. Eventuelle geringfügige Veränderungen an der Steuerbuchse 1 wie z. B. das Anfasen der Bohrung 2 zur Erzeugung der Steuerkante 13 sind ebenfalls einfach und kostengünstig auszuführen. Diese technische Lösung ist verglichen mit dem bekannten Plattenventil in der Steuerbuchse und insbesondere auch verglichen mit den aufwändigen externen hydraulischen Ventilmitteln ausgesprochen preiswert zu fertigen und kann darüber hinaus durch die Gestaltung des veränderlichen Querschnitts der Nut 5 zwischen der Öffnung im Bereich der Stirnseite 17 und dem Endbereich 19 nahezu beliebig parametrisiert werden.

### Bezugszeichenliste

- 1: Steuerbuchse
- 2: Bohrungen
- 3: Rückwirkungskörper
- 4: Ventilglied
- 5: Endbereich
- 6: Dichtungsring
- 7: Dichtungsring
- 8: äußerer Druckraum
- 10: Drehschieber
- 11: V-Nuten
- 12: Innenraum
- 13: Steuerkante
- 15: kreiszylindrischer Abschnitt
- 16: halbkugelförmiger Abschnitt
- 17: Stirnseite
- 18: Übergangsbereich
- 19: Endbereich

## Patentansprüche

1. Servolenkung für Kraftfahrzeuge mit einer hydraulischen Servoventilanordnung, die nach Art einer Drehschieboranordnung mit Rückwirkungsanordnung ausgebildet ist, mit einem Drehschieber (10) und einer den Drehschieber (10) koaxial umgebenden Steuerbuchse (1) sowie mit einer drehschieberseitigen Nutenanordnung (11) und einem steuerbuchsenseitigen Buchsenabschnitt, der einen hydraulischen Außenraum (8) von einem hydraulischen Innenraum (12) trennt, wobei der Buchsenabschnitt Radialbohrungen (2) für Rückwirkungskörper (3) aufweist, die unter einem radial von dem Außenraum (8) her einwirkenden Hydraulikdruck bei einer Auslenkung des Servoventils aus einer Mittellage zur Erzielung eines Rückwirkungsdrehmoments in die Nuten 11 drängbar sind, **dadurch gekennzeichnet, dass** die Steuerbuchse (1) in wenigstens einer Radialbohrung (2) ein axial in dieser Radialbohrung verlagerbares ventilglied (4) trägt, das von den Flanken der V-Nut (11) bei einer Relativdrehung des Drehschiebers (10) aus der Mittellage heraus in Radialrichtung in der Bohrung (2) verlagert wird und dabei einen veränderlichen öffnungsquerschnitt zwischen der Hochdruckseite und der Niederdruckseite der Rückwirkungsanordnung bildet.

2. Servolenkung nach Anspruch 1, **dadurch gekennzeichnet, dass** das Ventilglied (4) ein Schieber mit einer in die Mantelfläche eingebrachten achsparallelen Nut (5) ist.

3. Servolenkung nach einem der vorhergehenden Ansprüche, dadurch gekennzeichet, dass die Nut (5) in ihrer Längserstreckung einen sich ändernden Nutenquerschnitt aufweist.

4. Servolenkung nach einem der vorhergehenden Ansprüche, **dadurch gekennzeichnet, dass** die Nut (5) von dem Hochdruckteil zu dem Niederdruckteil hin sich im Querschnitt erweitert.

5. Servolenkung nach einem der vorhergehenden Ansprüche, **dadurch gekennzeichnet, dass** das Ventilglied (4) einen im wesentlichen kreiszylindrischen Querschnitt aufweist, wobei die dem Drehschieber (10) zugewandte Fläche eine halbkugelförmige oder kegelförmige Geometrie aufweist.

6. Servolenkung nach einem der vorhergehenden Ansprüche, **dadurch gekennzeichnet, dass** wenigstens die Oberfläche des Ventilglieds (4) und/oder die innere Oberfläche derjenigen Radialbohrung (2) der Steuerbuchse (1), in der das ventilglied (4) geführt ist, eine polierte Oberfläche aufweist .

7. Servolenkung nach einem der vorhergehenden Ansprüche, **dadurch gekennzeichnet, dass** der Öffnungsquerschnitt des Ventilglieds (4) von einer Abflachung gebildet wird.

## Claims

1. Power steering system for motor vehicles having a hydraulic servo valve arrangement, which is designed in the manner of a rotary slide arrangement with a feedback arrangement, having a rotary slide (10) and a control bushing (1) coaxially surrounding the rotary slide (10) as well as having a groove arrangement (11) on the rotary slide side and a bushing portion on the control bushing side, which separates a hydraulic outer space (8) from a hydraulic inner space (12), wherein the bushing portion comprises radial bores (2) for feedback members (3), which can be pushed into the grooves 11 by means of hydraulic pressure acting radially from the outer space (8) when the servo valve is deflected from a central position in order to achieve a feedback torque, **characterised in that** the control bushing (1) carries in at least one radial bore (2) a valve member (4) displaced axially in this radial bore, which valve member is displaced from the flanks of the V-groove (11) when the rotary slide (10) is rotated relatively from the central position in the radial direction in the bore (2) and in this connection forms a changeable opening cross section between the high pressure side and the low pressure side of the feedback arrangement.

2. Power steering system according to Claim 1, **characterised in that** the valve member (4) is a slide having a groove (5) introduced axially parallel into the enveloping surface.

3. Power steering system according to any one of the preceding claims, **characterised in that** the groove (5) comprises a varying groove cross section in its longitudinal extent.

4. Power steering system according to any one of the preceding claims, **characterised in that** the groove (5) extends from the high pressure part to the low pressure part in its cross section.

5. Power steering system according to any one of the preceding claims, **characterised in that** the valve member (4) comprises a substantially circular cylindrical cross section, wherein the area facing the rotary slide (10) comprises a hemispherical or spherical geometry.

6. Power steering system according to any one of the preceding claims, **characterised in that** at least the surface of the valve member (4) and/or the inner surface of the radial bore (2) of the control bushing (1), in which the valve member (4) is guided, comprises a polished surface.

7. Power steering system according to any one of the preceding claims, **characterised in that** the opening cross section of the valve member (4) is formed by a flat area.

## Revendications

1. Direction assistée pour véhicule automobile comprenant un agencement de valve d'assistance hydraulique qui est réalisé à la manière d'un agencement à tiroir rotatif avec un agencement de rétroaction, comprenant un tiroir rotatif (10) et un manchon de commande (1) entourant coaxialement le tiroir rotatif, ainsi qu'un agencement de rainures (11) du côté du tiroir rotatif et un tronçon de manchon, du côté du manchon de commande, qui sépare un espace hydraulique extérieur (8) d'un espace hydraulique intérieur (12), dans laquelle le tronçon de manchon comporte des perçages radiaux (2) pour des corps de rétroaction (3), qui sont susceptibles d'être forcés en pénétration dans les rainures (11) sous une pression hydraulique agissant radialement depuis l'espace extérieur (8) lors d'une déviation de la valve d'assistance depuis une position médiane afin d'engendrer un couple de rotation de rétroaction,
**caractérisée en ce que** le manchon de commande (1) porte, dans au moins un perçage radial (2), un opercule de valve (4) déplaçable axialement dans ce perçage radial, qui est déplacé lors d'une rotation relative du tiroir rotatif (10) par les flancs de la rainure en V (11) hors de la position médiane et en direction radiale dans le perçage (2) et forme ici une section d'ouverture variable entre le côté haute pression et le côté basse pression de l'agencement de rétroaction.

2. Direction assistée selon la revendication 1, **caractérisée en ce que** l'opercule de valve (4) est un tiroir avec une rainure (5) parallèle à l'axe ménagée dans la surface enveloppe.

3. Direction assistée selon l'une des revendications précédentes, **caractérisée en ce que** la rainure (5) présente dans son extension longitudinale une section de rainure variable.

4. Direction assistée selon l'une des revendications précédentes, **caractérisée en ce que** la rainure (5) s'élargit en section transversale depuis la partie à haute pression vers la partie à basse pression.

5. Direction assistée selon l'une des revendications précédentes, **caractérisée en ce que** l'opercule de valve (4) présente une section essentiellement cylindrique à base circulaire, et la surface tournée vers le tiroir rotatif (10) présente une géométrie en forme de demi-sphère ou en forme de cône.

6. Direction assistée selon l'une des revendications précédentes, **caractérisée en ce que** au moins la surface de l'opercule de valve (4) et/ou la surface intérieure du perçage radial (2) du manchon de commande (1) dans lequel est guidé l'opercule de valve (4) présente une surface polie.

7. Direction assistée selon l'une des revendications précédentes, **caractérisée en ce que** la section d'ouverture de l'opercule de valve (4) est formée par un méplat.
